# EUROPÄISCHE PATENTSCHRIFT

(11) **EP 0 943 030 B1**
(45) Veröffentlichungstag und Bekanntmachung des Hinweises auf die Patenterteilung: **25.04.2001**
(21) Anmeldenummer: 97951953.5
(22) Anmeldetag: 22.11.1997
(51) Int. Cl.: D06P 1/22, D06P 1/30, D06P 1/651, D06P 5/20, C09B 67/28, C09B 67/30

(54) **VERFAHREN ZUR REDUKTION VON SCHWEFEL- UND KÜPENFARBSTOFFEN**
PROCESS FOR REDUCING SULFUR AND VAT DYES
PROCEDE DE REDUCTION DE COLORANTS AU SOUFRE ET DE COLORANTS DE CUVE

(30) Priorität: 07.12.1996 DE 19650825
(43) Veröffentlichungstag der Anmeldung: 22.09.1999
(73) Patentinhaber: SÜDZUCKER AKTIENGESELLSCHAFT MANNHEIM/OCHSENFURT, 68165 Mannheim (DE)
(72) Erfinder: GRÜLL, Dietmar, R., A-3442 Langenschönbichl (AT); HAJI BEGLI, Alireza, D-67305 Ramsen (DE); KUBADINOW, Nikolai, A-1130 Wien (AT); KUNZ, Markwart, D-67550 Worms (DE); MUNIR, Mohammad, D-67271 Kindenheim (DE)
(74) Vertreter: Schrell, Andreas, Dr.
(86) Internationale Anmeldenummer: EP9706544
(87) Internationale Veröffentlichungsnummer: WO9824967

(56) Entgegenhaltungen:
- EP-A- 0 699 797
- WO-A-93/07221
- DE-A- 3 928 068
- GB-A- 2 201 165

## Beschreibung

Die Erfindung betrifft ein Verfahren zur Reduzierung von Farbstoffen aus der Gruppe bestehend aus Schwefelfarbstoffen und .Küpenfarbstoffen.

Verfahren zum Färben von cellulosehaltigen Textilmaterialien mit Schwefelfarbstoffen und Küpenfarbstoffen sind bekannt. Sowohl Küpen- als auch Schwefelfarbstoffe müssen vor beziehungsweise während des Färbeprozesses aus ihrer wasserunlöslichen Form mittels Reduktion in eine wasserlösliche, faseraffine Form, die sogenannte Leucoform, überführt werden. Bekannt ist es dazu, als Reduktionsmittel Natriumdithionit oder Natriumsulfid einzusetzen. Diese weisen jedoch den Nachteil auf, daß insbesondere bei empfindlicheren Farbstoffen eine sogenannte Überreduktion eintritt, die dazu führt, daß die Farbstoffe nach Reduktion und Aufbringen auf das Textilmaterial nicht wieder zum erwünschten Pigment oxidiert werden können. Zudem belasten die freigesetzten Sulfidionen die Umwelt durch unangenehme Gerüche und ihre Toxizität. Aus der DE 41 15 452 A1 ist es bekannt, Küpenfarbstoffe mittels Fructose, Mannose oder Glucose zu reduzieren. Aus der EP 0 699 797 A2 ist es bekannt, Schwefelfarbstoffe mittels Fructose, Galactose, Glucose, Mannose, Maltose oder Lactose zu reduzieren. Die in diesen Druckschriften beschriebene Reduktion der Farbstoffe unter Zuhilfenahme von reduzierenden Zuckern hat den Vorteil, daß die negativen, auf der Freisetzung von Sulfidionen beruhenden Umwelteinflüsse vermieden werden. Aufgrund des geringen Redoxpotentials, beispielsweise von Glucose, ist dieses in der Lage, die meisten der verwendeten Farbstoffe zu reduzieren, wobei gleichzeitig die Gefahr der Überreduktion vermieden wird. Als nachteilig erweist sich jedoch das vergleichsweise langsame Einstellen des Redoxpotential-Gleichgewichts. Die unter Zuhilfenahme der vorgenannten Zucker durchgeführten Färbeverfahren benötigen aufgrund der beschriebenen unvorteilhaften Reduktionskinetik einen vergleichsweise langen Zeitraum zur Reduktion der eingesetzten Farbstoffe.

Das der vorliegenden Erfindung zugrundeliegende technische Problem liegt also darin, ein Verfahren zur Reduktion von Küpen- und Schwefelfarbstoffen zur Verfügung zu stellen, das die vorgenannten Nachteile überwindet, insbesondere ökologisch unbedenklich ist, eine breite Palette handelsüblicher Farbstoffe reduzieren kann, die Gefahr der Überreduktion vermeidet und eine verbesserte Reduktionskinetik aufweist.

Das der vorliegenden Erfindung zugrundeliegende technische Problem wird mittels des Verfahrens gemäß Hauptanspruch gelöst. Demgemäß stellt die Erfindung ein Verfahren zur Reduktion von Farbstoffen aus der Gruppe bestehend aus Schwefelfarbstoffen und Küpenfarbstoffen bereit, wobei die Reduktion in wässrig-alkalischem Medium mit Isomaltulose oder deren Gemisch mit anderen reduzierenden Zuckern, insbesondere Trehalulose, enthaltendem Reduktionsmittel durchgeführt wird. Die Verwendung von Isomaltulose, insbesondere ein auch Trehalulose enthaltenes Gemisch mit Isomaltulose, als Reduktionsmittel bei der Reduktion von Schwefelfarbstoffen und Küpenfarbstoffen von der wasserunlöslichen Form in die wasserlösliche Leucoform weist den Vorteil auf, daß sich das Redoxpotential-Gleichgewicht von Isomaltulose, insbesondere von Gemischen, die diesen Zucker enthalten, erheblich schneller einstellt, als bei den herkömmlicherweise verwendeten Zuckern. Die schnellere Einstellung des Redoxpotential-Gleichgewichts ermöglicht in vorteilhafter Weise eine zeitlich verkürzte Reduktionsphase beim Färben von Textilmaterialien, was letztendlich zu Kostenersparnissen führt. Das erfindungsgemäß vorgesehene Reduktionsmittel ist ökologisch unbedenklich, weist ein niedriges Redoxpotential auf, so daß praktisch alle handelsüblichen Farbstoffe reduziert werden können, und führt nicht zu deren Überreduktion.

Im Zusammenhang mit der vorliegenden Erfindung werden unter Schwefelfarbstoffen Farbstoffe verstanden, die durch Kochen chemischer Verbindungen in Polysulfiden oder in Schwefel erhalten werden können. Im Zusammenhang mit der vorliegenden Erfindung werden unter Küpenfarbstoffen Farbstoffe verstanden, die als Derivate des Anthrachinons aufgefaßt werden können.

Die Erfindung sieht vor, als Reduktionsmittel Isomaltulose, insbesondere ein Gemisch, das diesen Zucker enthält, einzusetzen. In besonders bevorzugter Weise enthält das Reduktionsmittel neben Isomaltulose zusätzlich Trehalulose, Isomaltose, Saccharose, Glucose, Fructose oder Kohlenhydrat-Oligomere. Insbesondere betrifft die Erfindung ein Reduktionsmittel, das 10 bis 90 Gew.-% Trehalulose, 10 bis 90 Gew.-% Isomaltulose, 0 bis 15 Gew.-% Saccharose, 0 bis 20 Gew.-% Fructose, 0 bis 20 Gew.-% Glucose, 0 bis 5 Gew.-% Isomaltose und 0 bis 5 Gew.-% Kohlenhydrat-Oligomere aufweist. In vorteilhafter Weise lassen sich Isomaltulose enthaltende Reduktionsmittel herstellen, indem Saccharose enzymatisch zu Isomaltulose umgelagert und Isomaltulose weitgehend abgetrennt wird, so daß ein nicht-abgetrennte Isomaltulose und Trehalulose enthaltendes Produkt erhalten wird. Die Herstellungsweise und Zusammensetzung eines Isomaltulose und Trehalulose enthaltenden Gemisches ist an sich bekannt und wird z.B. in EP 0 625 578 A1 beschrieben. Das erfindungsgemäße Reduktionsmittel kann neben den erwähnten Zuckern auch andere Reduktionsmittel oder Reduktionshilfsmittel enthalten, wie beispielsweise Natriumdithionit, Puffersysteme, Komplexbildner oder ähnliches.

Die Reduktion wird zweckmäßigerweise unter alkalischen Bedingungen in wässriger Lösung durchgeführt, wobei besonders vorteilhaft pH-Werte > 11, insbesondere von 11 bis 12,5, sind.

Die Erfindung sieht in besonders vorteilhafter Weise vor, die Reduktion bei mindestens 50°C, vorzugsweise bei 80°C bis 100°C, durchzuführen.

Die Erfindung sieht in vorteilhafter Weise vor, Konzentrationen von 1 bis 50 g/l, vorzugsweise von 10 bis 30 g/l, des Reduktionsmittels vorzusehen.

Die Erfindung betrifft auch Verfahren zum Färben oder Bedrucken von cellulosehaltigen Textilmaterialien mit Farbstoffen aus der Gruppe bestehend aus Schwefel- oder Küpenfarbstoffen, wobei die Farbstoffe gemäß den vorgenannten erfindungsgemäßen Verfahren in die wasserlösliche, faseraffine Leuco-Form überführt werden.

Im Zusammenhang mit der vorliegenden Erfindung werden unter cellulosehaltigen Textilmaterialien Materialien verstanden, die Cellulosefasern und gegebenenfalls Fasern aus anderen Materialien, beispielsweise halbsynthetischen oder vollsynthetischen Stoffen enthalten, wie Celluloseacetate, Polyolefine, Polyacrylnitrile, Polyester oder Polyamide.

Das erfindungsgemäße Verfahren zum Färben oder Bedrucken von cellulosehaltigen Textilmaterialien umfaßt die vorgenannte erfindungsgemäße Reduktion mit Hilfe von Isomaltulose oder einem Isomaltulose und Trehalulose enthaltendem Reduktionsmittel, wobei der Farbstoff vor, während oder nach der Reduktion der auf das zu färbende Textilmaterial aufgebracht wird. Im Anschluß an das Aufbringen und Reduzieren des Farbstoffes wird dieser wieder oxidiert und damit auf dem Textilmaterial fixiert, womit die erwünschte Farbentwicklung und Echtheit des gefärbten Textilmaterials erreicht wird. Die Oxidation wird vorteilhafterweise mittels gasförmigen Sauerstoffs oder unter Verwendung oxidierender Salze durchgeführt.

In vorteilhafter Weise sieht die Erfindung vor, das erfindungsgemäß einzusetzende Reduktionsmittel unter Ultraschalleinwirkung zur Reduktion des aufzubringenden Farbstoffs während des Färbevorgangs einzusetzen.

Die Erfindung wird anhand der Figuren und der dazugehörigen Ausführungsbeispiele näher erläutert. Es zeigen:
- Figur 1: eine grafische Darstellung von Remissionswerten (Schwefelfarbstoffe),
- Figur 2: eine grafische Darstellung von Remissionswerten (Küpenfarbstoffe),
- Figur 3: eine grafische Darstellung der Einstellung des Redoxpotentials verschiedener Zuckerlösungen in wäßrig-alkalischem Milieu und
- Figur 4: eine grafische Darstellung der Reduktionskinetiken eines - Zuckergemisches aus Isomaltulose, Trehalulose sowie weiteren Zuckern wie Glucose, von Isomaltulose und von Glucose.

### Beispiel 1:

### Färbung von Textilmaterialien mittels Schwefelfarbstoff

Mittels des Labor-Färbeapparates Turbomat der Firma Ahiba wurde Batist (gewaschen und alkalisch abgekocht) aus Baumwolle mit 10 % Immedialschwarz CBR, flüssig, gefärbt. Der Farbstoff wurde während des Auftragens auf das Textilmaterial mit einem Reduktionsmittel zur wasserlöslichen Form reduziert. Die Verfahrensdurchführung entspricht der üblicherweise verwendeten Technologie (stark alkalisch, bei 40°C beginnend bis auf 100°C erwärmt, die Reaktionsdauer bei 100°C beträgt 1 Stunde). Das Flottenverhältnis betrug 1:10.

In einem Vergleichsversuch wurde als Reduktionsmittel eine wässrige Glucose-Lösung (10 g/l) verwendet.

Versuch 1 (Trehalulose, Isomaltulose) wurde mit einem Reduktionsmittel der folgenden Zusammensetzung durchgeführt: 17,5 Gew.-% Fructose, 14,9 Gew.-% Glucose, 19,5 Gew.-% Isomaltulose, 41,5 Gew.-% Trehalulose, 3,1 Gew.-% Isomaltose, 3,2 Gew.-% höhere Oligomeren (einschließlich Reversionsprodukte), 0,3 Gew.-% nicht identifizierte Reste (bezogen auf Trockensubstanz) (Konzentration des Reduktionsmittels: 14 g/l wässrige Lösung).

Versuch 2 (Trehalulose, Isomaltulose, Saccharose) wurde mit einem Reduktionsmittel der folgenden Zusammensetzung durchgeführt : 12,3 Gew.-% Fructose, 9,7 Gew.-% Glucose, 10,4 Gew.-% Saccharose, 19,5 Gew.-% Isomaltulose, 41,5 Gew.-% Trehalulose, 3,1 Gew.-% Isomaltose, 3,2 Gew.-% höhere Oligomere (einschließlich Reversionsprodukte), 0,3 Gew.-% nicht identifizierte Reste (bezogen auf Trockensubstanz) (Konzentration des Reduktionsmittels: 14 g/l wässrige Lösung). Aus diesem Reduktionsmittel läßt sich durch Hydrolyse das in Versuch 1 eingesetzte Reduktionsmittel herstellen.

### Ergebnisse:

### A. Farbdifferenzmessung (nach CIE Lab) am gefärbten Textilsubstrat

**Tabelle 1:**

| Versuch 1 | | | | | | |
|---|---|---|---|---|---|---|
| Muster | Glucose-Vergleich vs. Versuch 1 | | | | | |
| Lichtart | DC | DH | DE | DL | Da | Db |
| D 65 | -0,0 | -0,0 | 0,4 | 0,4 | -0,0 | 0,0 |
| A | -0,0 | -0,0 | 0,4 | 0,4 | -0,0 | 0,0 |
| TL84 | -0,0 | -0,0 | 0,4 | 0,4 | -0,0 | 0,1 |

**Tabelle 2:**

| Versuch 2 | | | | | | |
|---|---|---|---|---|---|---|
| Muster | Glucose-Vergleich vs. Versuch 2 | | | | | |
| Lichtart | DC | DH | DE | DL | Da | Db |
| D 65 | -0,3 | -0,2 | 0,8 | 0,7 | -0,1 | 0,3 |
| A | -0,3 | -0,2 | 0,8 | 0,7 | -0,0 | 0,3 |
| TL84 | -0,4 | -0,2 | 0,8 | 0,7 | -0,1 | 0,4 |

Tabelle 1 und Tabelle 2 zeigen die Ergebnisse der Farbdifferenzbemessung nach DIN 5033/Teil 1 und DIN 6174. Dabei bedeuten: DC Differenz der Reinheit beziehungsweise Buntheit, DH Differenz im Farbton, DE gesamte Farbdifferenz (bei DE > 2 ist eine visuelle Differenz festzustellen), DL Helligkeitsdifferenz, Da Farbdifferenz der Rot-Grün-Achse und Db Farbdifferenz der Gelb-Blau-Achse. Den Tabellen 1 und 2 ist zu entnehmen, daß der DE-Wert sowohl bei der Farbdifferenzmessung des Versuchs 1/Glucose-Vergleich als auch bei der des Versuchs 2/Glucose-Vergleich kleiner 2 beträgt, so daß eine Farbdifferenz der gefärbten Textilien visuell nicht erkennbar ist.

### B. Farbremission

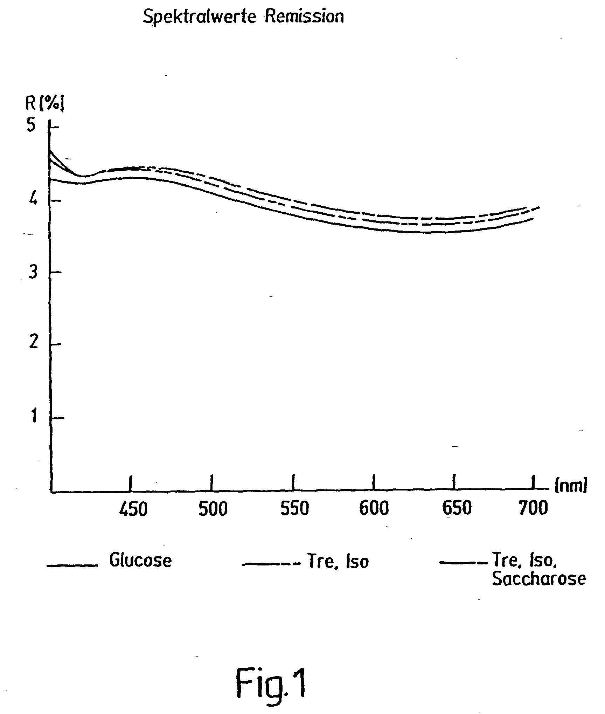

Farbremissionsmessungen am gefärbten Textilmaterial führten zu den in Figur 1 dargestellten Ergebnissen (Iso: Isomaltulose, Tre: Trehalulose). Der Verlauf der bei den erfindungsgemäßen Reduktionen ermittelten Farbremissionswerte entspricht in etwa dem des Vergleichsverfahrens, wobei jedoch leicht höhere Remissionswerte beobachtet wurden.

### C. Farbechtheiten

Die Tabelle 3 verdeutlicht die Ergebnisse von Bestimmungen der Waschechtheit, der Schweißechtheit und der Reibechtheit.
1.) Bestimmung der Waschechtheit (60°C) nach DIN EN 20105, Teil C03
2.) Bestimmung der Waschechtheit (95°C) nach DIN EN 20105, Teil CO5
3.) Bestimmung der Schweißechtheit nach DIN 54020
4.) Bestimmung der Reibechtheit nach DIN EN ISO 105-X 12

### Textilmaterial:

Batist 100 CO (Baumwolle), Farbe schwarz

**Tabelle 3:**

| Farbechtheiten | | | |
|---|---|---|---|
| | Glucose-Vergleich | Versuch 1 | Versuch 2 |
| 1. Waschechtheit 60°C | | | |
| Note Anbluten | 5 | 5 | 5 |
| Note Farbtonänderung | 3 H | 3-4 H | 3 H |

| 2. Waschechtheit 95°C | | | |
|---|---|---|---|
| Note Anbluten | 5 | 4-5 | 4-5 |
| Note Farbtonänderung | 3 H | 3 H | 3 H |

| 3. Schweißechtheit alkalisch | | | |
|---|---|---|---|
| Note Anbluten | 5 | 5 | 5 |
| Note Farbtonänderung | 4 H | 4 H | 3 H |
| sauer | | | |
| Note Anbluten | 5 | 5 | 5 |
| Note Farbtonänderung | 3-4 H | 3-4 H | 3 H |

| 4. Reibechtheit | | | |
|---|---|---|---|
| Note trocken | 4-5 | 3-4 | 4 |
| Note naß | 2-3 | 2-3 | 3 |
| H = heller | | | |

Die Tabelle 3 verdeutlicht, daß die mittels der erfindungsgemäß eingesetzten Reduktionsmittel erzielten Farbechtheiten der mit Glucose erzielten Farbechtheit entsprechen.

### D. Bestimmung der Durchsichtsfarbzahlen der Farbflotte nach beendeter Färbung

**Tabelle 4:**

| Durchsichtsfarbzahlen | | | |
|---|---|---|---|
| | 436 nm | 525 nm | 620 nm |
| Glucose-Vergleich | 1620 | 1190 | 1250 |
| Versuch 1 | 1750 | 1330 | 1400 |
| Versuch 2 | 1620 | 1160 | 1210 |

Die Tabelle 4 verdeutlicht die Ergebnisse, die bei der Bestimmung der Durchsichtsfarbzahlen von der Farbflotte nach beendeter Färbung erzielt wurden. Auch hier entsprechen die bei Anwendung der erfindungsgemäßen Verfahren ermittelten Daten denen des Vergleichsverfahrens.

### Beispiel 2:

### Färbung von- Textilmaterialien mittels Küpenfarbstoffen

### Eingesetztes Material:

| | |
|---|---|
| Textilmaterial | Gewebe 100 % CO (Baumwolle, rohweiß, färbefertig vorbehandelt) |
| Probengewicht | 8,5 g |
| Farbstoff | Indigo rein (BASF) |
| Farbstoffeinsatz | 4 g/l |
| Hilfsmittel | 5 ml/l NaOH |
| | 3 g/l Natriumdithionit (Reduktionsmittel) |
| Ansatz der Stammküpe | 80 ml Weichwasser |
| | 4 g Indigo rein (BASF) |
| | 5 ml NaOH |
| | 3 g/l Natriumdithionit |
| mit Weichwasser auf | 100 ml auffüllen. |

### Durchführung:

Das Indigopulver wird in 50 ml Wasser suspendiert. Zu 30 ml Wasser wird zunächst Natronlauge und anschließend als Reduktionsmittel Natriumdithionit gegeben. Sowohl der Farbstoff als auch der Hilfsmittelansatz werden auf 50°C erwärmt und in ein Becherglas (200 ml Volumen) überführt. Dieser Ansatz wird auf 100 ml aufgefüllt und 30 Min. bei 50°C verküpt.

### Färbeküpe:

In einem Becher (1500 ml Volumen) wurden 800 ml Wasser auf 50°C erwärmt, mit Natronlauge und Natriumdithionit vorbehandelt, die -Stammküpe zugegeben und anschließend auf 1000 ml aufgefüllt. Gefärbt wurde in zwei Zügen ä 10 Minuten.

### A. Färbung ohne Reduktionsmittel:

Die Färbung wurde wie vorstehend beschrieben durchgeführt, wobei jedoch kein Reduktionsmittel eingesetzt wurde. Dieser Versuch dient als Kontrolluntersuchung.

Es wurde beobachtet, daß die Flotte ihr dunkelblaues Aussehen behielt. Beim Einbringen von Textilmaterial in das Färbebad konnte kein Anfärben beobachtet werden. Es wurde lediglich ein leichtes Anschmutzen des Textilmaterials festgestellt.

### B. Färbung mit Natriumdithionit als Reduktionsmittel:

Die Färbung wurde wie vorstehend beschrieben durchgeführt, wobei jedoch als Reduktionsmittel Natriumdithionit eingesetzt wurde. Dieser Versuch diente als Vergleich zu den erfindungsgemäßen Verfahren.

Es wurde beobachtet, daß die Flotte nach 15 Minuten Verküpen eine gelbliche Färbung und deren Oberfläche eine leichte metallisierende Blaufärbung aufwies. Das eingebrachte Textilmaterial zeigt nach dem Luftgang eine tiefblaue Färbung.

### C. Färbung mit dem erfindungsgemäßen Reduktionsmittel enthaltend Isomaltulose und Trehalulose (Versuch 1) :

Die Färbung wurde mittels des vorstehend beschriebenen Verfahrens durchgeführt. Anstelle von Natriumdithionit wurde ein Reduktionsmittel aus 17,5 Gew.-% Fructose, 14,9 Gew.-% Glucose, 19,5 Gew.-% Isomaltulose, 41,5 Gew.-% Trehalulose, 3,1 Gew.-% Isomaltose, 3,2 Gew.-% höhere Oligomere (einschließlich Reversionprodukte) 0,3 Gew.-% nicht-identifizierte Reste (bezogen auf Trockensubstanz) eingesetzt. Das Reduktionsmittel wurde in einer Konzentration von 10 g/l, 20 g/l und 30 g/l eingesetzt.

Es wurde beobachtet, daß die Flotte nach der Zugabe des erfindungsgemäß eingesetzten Reduktionsmittels und anschließendem Verküpen eine blaugrüne Färbung annahm. Eingebrachte Textilmaterialien zeigten nach dem Luftgang eine blaue Färbung, die jedoch wesentlich heller als bei der Natriumdithionit-Küpe ausfiel. Mit steigender Einsatzmenge des Reduktionsmittels nahm die Tiefe der Färbung ab.

D. Färbung mit den erfindungsgemäßen Reduktionsmittel enthaltend Isomaltulose, Trehalulose und Saccharose (Versuch 2):

Die Versuchsbedingungen entsprachen den vorstehend beschriebenen Versuchsbedingungen. Anstelle von Natriumdithionit wurde ein Reduktionsmittel aus 12,3 Gew.-% Fructose, 9,7 Gew.-% Glucose, 10,4 Gew.-% Saccharose, 19,5 Gew.-% Isomaltulose, 41,5 Gew.-% Trehalulose, 3,1 Gew.-% Isomaltose, 3,2 Gew.-% höhere Oligomere (einschließlich Reversionsprodukte) und 0,3 Gew.-% nicht-identifizierte Reste eingesetzt. Das Reduktionsmittel wurde in einer Konzentration von 10 g/l, 20 g/l und 30 g/l eingesetzt.

Es wurde beobachtet, daß die Flotte nach der Zugabe des erfindungsgemäß eingesetzten Reduktionsmittels und anschließendem Verküpen eine blaugrüne Färbung annahm. Eingebrachte Textilmaterialien zeigten nach dem Luftgang eine Blaufärbung, die jedoch wesentlich heller als bei der Natriumdithionit-Küpe ausfiel. Mit steigender Einsatzmenge des Reduktionsmittels nahm die Tiefe der Färbung ab.

### E. Färbung mit dem erfindungsgemäßen Reduktionsmittel enthaltend Trehalulose, Isomaltulose und Saccharose unter Einfluß von Ultraschall:

Die Versuchsbedingungen und der Versuchsansatz entsprachen den unter D) beschriebenen. Zusätzlich wurde Ultraschall angewendet. Es wurde beobachtet, daß die Flotte nach der Zugabe des erfindungsgemäßen Reduktionsmittels und anschließendem Verküpen eine blaugrüne Färbung annahm. Die eingebrachten Textilien zeigten eine Blaufärbung, die erheblich dunkler als die Färbung ohne Verwendung von Ultraschall ausfiel. Mit steigender Einsatzmenge des Reduktionsmittels nahm die Tiefe der Färbung ab.

Die folgende Tabelle erläutert die Versuchsansätze:

**Tabelle 5:**

| Versuchsansätze | | | |
|---|---|---|---|
| Nr. | Versuchscode | Reduktionsmittel | Einsatzmenge in [g] |
| 1 | ZU001 | ohne | - |
| 2 | ZU002 | Natriumdithionit | 3 |
| 3 | ZU003 | Isomaltulose, Trehalulose, Saccharose | 10 |
| 4 | ZU004 | Isomaltulose, Trehalulose | 10 |
| 5 | ZU005 | Isomaltulose, Trehalulose, Saccharose (mit Ultraschall) | 10 |
| 6 | ZU006 | Isomaltulose, Trehalulose, Saccharose | 20 |
| 7 | ZU007 | Isomaltulose, Trehalulose | 20 |
| 8 | ZU008 | Isomaltulose, Trehalulose, Saccharose, (mit Ultraschall) | 20 |
| 9 | ZU009 | Isomaltulose, Trehalulose, Saccharose | 30 |
| 10 | ZU010 | Isomaltulose, Trehalulose | 30 |
| 11 | ZU011 | Isomaltulose, Trehalulose, Saccharose (mit Ultraschall) | 30 |

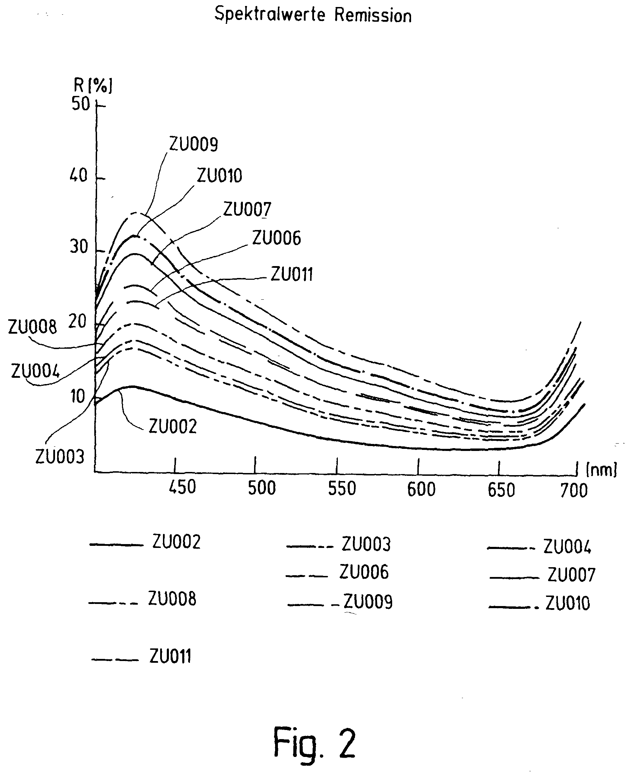

Die in der Tabelle 5 aufgeführten und mit Versuchcodes versehenen Versuche führten zu den in Figur 2 dargestellten Ergebnissen.

Die Remissionswerte, die mit den erfindungsgemäßen Verfahren erzielt werden, übertrafen die, die mittels Natriumdithionit erreicht wurden.

### Echtheitsprüfung:

Die Echtheitsprüfung zeigt die Widerstandsfähigkeit einer Färbung gegen Einwirkungen der textilen Produktion (Fabrikationsechtheit) und im Gebrauch (Gebrauchsechtheit).

**Tabelle 6:**

| Echtheitsprüfung | | | | |
|---|---|---|---|---|
| Nr. | Reibechtheit | | Waschechtheit | |
| | Note trocken | Note naß | Note Anbluten | Note Farbtonänderung |
| 2 | 3-4 | 2 | 4-5 | 3-4 H |
| 3 | 4 | 2-3 | 4-5 | 3 H |
| 4 | 4 | 2 | 4-5 | 3 H |
| 5 | 4 | 2 | 4-5 | 3-4 H |
| 6 | 4 | 2-3 | 5 | 3-4 H |
| 7 | 4 | 2-3 | 5 | 3 H |
| 8 | 4 | 2-3 | 5 | 3 H |
| 9 | 4-5 | 3 | 5 | 3 H |
| 10 | 4 | 2-3 | 5 | 3 H |
| 11 | 4 | 2-3 | 5 | 2-3 H |
| H = heller | | | | |

Sowohl die Reibechtheit als auch die Waschechtheit der erfindungsgemäß eingesetzten Reduktionsmittel ist als gut anzusehen und denen der mit Natriumdithionit erzielten vergleichbar.

### Beispiel 3: Einstellung des Redoxpotentials E

Das Beispiel 3 verdeutlicht, daß Isomaltulose oder isomaltulosehaltige Gemische ihr Redoxpotential-Gleichgewicht schneller einstellen als andere Zukker wie Glucose.

Bei einem pH-Wert von 12,2 (KOH 25 %ig) und einer Temperatur von 20 °C wurde die Einstellung des Gleichgewichts des Redoxpotentials E von jeweils 1,5 molaren Lösungen gegenüber Ag/AgCl/KCl (3 M, E*=210 mV vs SHE, 20°C) untersucht. Die untersuchten 1,5 molaren Lösungen enthielten a) Isomaltulose sowie b) ein Isomaltulose enthaltenes Zuckergemisch (Isomaltulose, Fructose, Glucose, Trehalulose, Isomaltose). Als Vergleichssubstanzen dienten c) Glucose, d) Fructose, e) oxidierte Isomaltulose und f) Trehalulose.

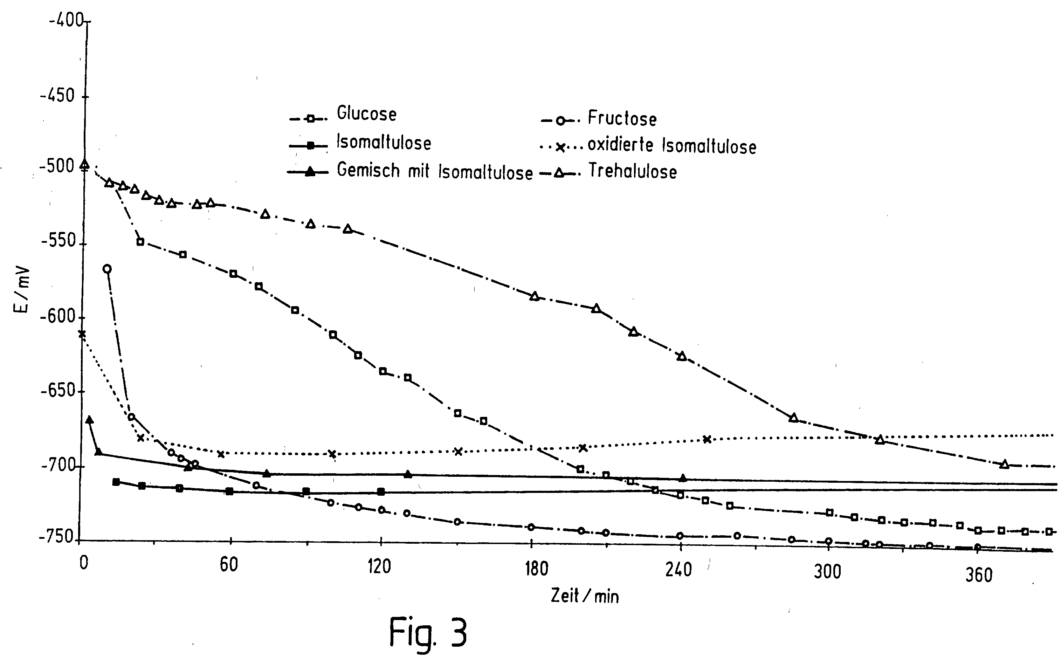

Der Figur 3 kann entnommen werden, daß sich das Redoxpotential-Gleichgewicht bei Isomaltulose und isomaltulosehaltigen Gemischen bereits nach wenigen Minuten einstellt, während die Einstellung des Redoxpotential-Gleichgewichtes bei den Vergleichssubstanzen erheblich länger, nämlich mehrere Stunden dauert. Oxidierte Isomaltulose zeigt eine gegenüber den Vergleichssubstanzen erhöhte Geschwindigkeit bei der Einstellung des Redoxpotential-Gleichgewichts.

### Beispiel- 4: Reduktion von Schwefel/Schwarz

Dieses Beispiel verdeutlicht, daß Isomaltulose oder isomaltulosehaltige Gemische (Isomaltulose, Trehalulose, Glucose, Fructose, Isomaltose) zu einer erheblich schnelleren Reduktion von Schwefelfarbstoffen in der Lage sind als die Vergleichssubstanz Glucose.

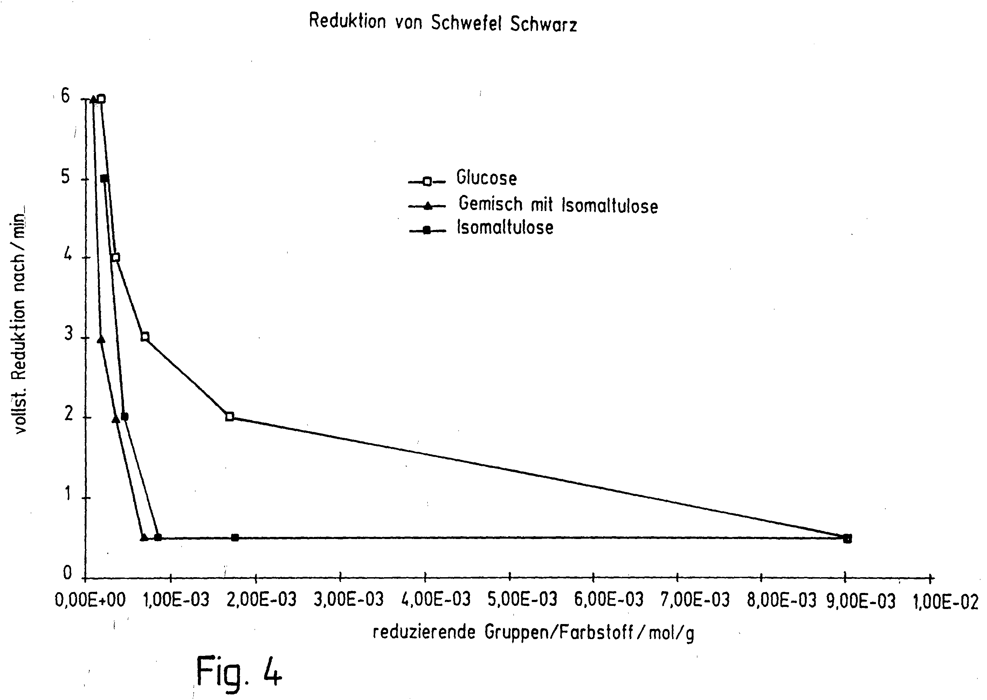

In der Figur 4 ist die Zeitspanne, innerhalb derer eine vollständige Farbstoffreduktion erreicht wird, in Abhängigkeit von dem Verhältnis reduzierender Carbonylgruppen des Reduktionsmittels zur Farbstoffmenge aufgetragen.

Die Figur 4 zeigt, daß eine vollständige Reduktion von vorbehandeltem Diresul Liquid Black RDT (Clariant) mit Isomaltulose oder isomaltulosehaltigen Gemischen bei 50°C erheblich schneller erfolgt als bei Verwendung von Glucose als Reduktionsmittel. Der ursprünglich lösliche Farbstoff Diresul Liquid Black RDT wurde vor der Untersuchung in die absolut sulfidfreie und damit unlösliche Form überführt. Dieser für die Untersuchung eingesetzte Farbstoff ist in einer stark alkalischen und reduktionsmittelfreien wässrigen Lösung bei 50°C völlig unlöslich.

Die Figuren 3 und 4 verdeutlichen daher, daß das erfindungsgemäß eingesetzte Reduktionsmittel eine schnellere Einstellung des Redoxpotential-Gleichgewichts ermöglicht und daher eine zeitlich verkürzte Reduktion der Farbstoffe erzielt wird.

## Patentansprüche

1. Verfahren zur Reduktion von Farbstoffen aus der Gruppe bestehend aus Schwefelfarbstoffen und Küpenfarbstoffen, wobei die Reduktion in wässrig-alkalischem Medium mit Isomaltulose oder einem Isomaltulose enthaltenden Gemisch als Reduktionsmittel durchgeführt wird.

2. Verfahren nach Anspruch 1, **dadurch gekennzeichnet**, daß das Reduktionsmittel zusätzlich Trehalulose, Isomaltose, Saccharose, Glucose, Fructose oder Kohlenhydrat-Oligomere aufweist.

3. Verfahren nach einem der vorhergehenden Ansprüche, **dadurch gekennzeichnet**, daß das Reduktionsmittel 10 bis 90 Gew.-% Trehalulose, 10 bis 90 Gew.-% Isomaltulose, 0 bis 15 Gew.-% Saccharose, 0 bis 20 Gew.-% Fructose, 0 bis 20 Gew.-% Glucose, 0 bis 5 Gew.-% Isomaltose und 0 bis 5 Gew.-% Kohlenhydrat-Oligomere (bezogen auf die Trockensubstanz) enthält.

4. Verfahren nach einem der vorhergehenden Ansprüche, **dadurch gekennzeichnet**, daß das Reduktionsmittel 42 Gew.-% Trehalulose, 20 Gew.-% Isomaltulose, 10 Gew.-% Saccharose, 12 Gew.-% Fructose, 10 Gew.-% Glucose, 3 Gew.-% Isomaltose und 3 Gew.-% Oligomere (bezogen auf die Trockensubstanz) enthält.

5. Verfahren nach einem der Ansprüche 1 bis 3, **dadurch gekennzeichnet**, daß das Reduktionsmittel 42 Gew.-% Trehalulose, 20 Gew.-% Isomaltulose, 17 Gew.-% Fructose, 15 Gew.-% Glucose, 3 Gew.-% Isomaltose und 3 Gew.-% Kohlenhydrat-Oligomere (bezogen auf die Trockensubstanz) enthält.

6. Verfahren nach einem der vorhergehenden Ansprüche, **dadurch gekennzeichnet,** daß das wässrigalkalische Medium einen pH-Wert > 11 aufweist.

7. Verfahren nach einem der vorhergehenden Ansprüche, **dadurch gekennzeichnet**, daß die Reduktion bei mindestens 50°C, vorzugsweise 80°C bis 100°C, ausgeführt wird.

8. Verfahren nach einem der vorhergehenden Ansprüche, **dadurch gekennzeichnet**, daß die Reduktion unter Ultraschalleinwirkung stattfindet.

9. Verfahren zum Färben oder Bedrucken von cellulosehaltigen Textilmaterialien mit Farbstoffen aus der Gruppe bestehend aus Schwefelfarbstoffen oder Küpenfarbstoffen, wobei der zunächst wasserunlösliche Farbstoff auf das Textilmaterial aufgebracht, der Farbstoff gemäß einem der Verfahren nach einem der Ansprüche 1 bis 8 reduziert und anschließend oxidiert wird.

10. Verfahren zum Färben oder Bedrucken von cellulosehaltigen Textilmaterialien mit Farbstoffen aus der Gruppe bestehend aus Schwefelfarbstoffen oder Küpenfarbstoffen, wobei der zunächst wasserunlösliche Farbstoff nach einem der Ansprüche 1 bis 8 reduziert, dann auf das Material aufgebracht und anschließend oxidiert wird.

11. Verfahren zum Färben oder Bedrucken von cellulosehaltigen Textilmaterialien mit Farbstoffen aus der Gruppe bestehend aus Schwefelfarbstoffen oder Küpenfarbstoffen, wobei der zunächst wasserunlösliche Farbstoff nach einem der Ansprüche 1 bis 8 reduziert und gleichzeitig auf das Material aufgebracht sowie anschließend oxidiert wird.

12. Verfahren nach einem der Ansprüche 9 bis 11, **dadurch gekennzeichnet**, daß das Färben oder Bedrukken unter Ultraschalleinwirkung stattfindet.

## Revendications

1. Procédé de réduction de colorants choisis dans le groupe consistant en des colorants au soufre et des colorants de cuve, dans lequel la réduction est effectuée en milieu hydro-alcalin avec de l'isomaltulose ou avec un mélange contenant de l'isomaltulose en tant qu'agent réducteur.

2. Procédé selon la revendication 1,
caractérisé en ce que
l'agent réducteur possède en supplément du tréhalulose, de l'isomaltose, du saccharose, du glucose, du fructose ou des oligomères d'hydrate de carbone.

3. Procédé selon l'une quelconque des revendications précédentes,
caractérisé en ce que
l'agent réducteur contient de 10 à 90 % en poids de tréhalulose, de 10 à 90 % en poids d'isomaltulose, de 0 à 15 % en poids de saccharose, de 0 à 20 % en poids de fructose, de 0 à 20 % en poids de glucose, de 0 à 5 % en poids d'isomaltose, et de 0 à 5 % en poids d'oligomères d'hydrate de carbone (rapporté à la substance sèche).

4. Procédé selon l'une quelconque des revendications précédentes,
caractérisé en ce que
l'agent réducteur contient 42 % en poids de tréhalulose, 20 % en poids d'isomaltulose, 10 % en poids de saccharose, 12 % en poids de fructose, 10 % en poids de glucose, 3 % en poids d'isomaltose et 3 % en poids d'oligomères (rapporté à la substance sèche).

5. Procédé selon l'une quelconque des revendications 1 à 3,
caractérisé en ce que
l'agent réducteur contient 42 % en poids de trehalulose, 20 % en poids d'isomaltulose, 17 % en poids de fructose, 15 % en poids de glucose, 3 % en poids d'isomaltose et 3 % en poids d'oligomères d'hydrate de carbone (rapporté à la substance sèche).

6. Procédé selon l'une quelconque des revendications précédentes,
caractérisé en ce que
le milieu hydro-alcalin possède une valeur de pH > 11.

7. Procédé selon l'une quelconque des revendications précédentes,
caractérisé en ce que
la réduction est effectuée à au moins 50°C, de préférence de 80 à 100°C.

8. Procédé selon l'une quelconque des revendications précédentes,
caractérisé en ce que
la réduction a lieu sous l'action des ultrasons.

9. Procédé de teinture ou d'impression de matériaux textiles contenant de la cellulose, avec des colorants choisis dans le groupe consistant en des colorants au soufre ou des colorants de cuve, dans lequel le colorant en premier lieu insoluble dans l'eau est appliqué sur le matériau textile, on réduit le colorant conformément à l'un des procédés selon l'une des revendications 1 à 8, et ensuite on l'oxyde.

10. Procédé de teinture ou d'impression de matériaux textiles contenant de la cellulose avec des colorants choisis dans le groupe consistant en des colorants au soufre ou des colorants de cuve, dans lequel le colorant en premier lieu insoluble dans l'eau est réduit selon l'une quelconque des revendications 1 à 8, puis est appliqué sur le matériau et ensuite est oxydé.

11. Procédé de teinture ou d'impression de matériaux textiles contenant de la cellulose, avec des colorants choisis dans le groupe consistant en des colorants au soufre ou des colorants de cuve, dans lequel le colorant en premier lieu insoluble dans l'eau est réduit selon l'une quelconque des revendications 1 à 8, en même temps est appliqué sur le matériau ainsi qu'ensuite est oxydé.

12. Procédé selon l'une quelconque des revendications 9 à 11,
caractérisé en ce que
la teinture ou l'impression se produit sous l'action des ultrasons.

## Claims

1. A process for the reduction of dyes from the group comprising sulphur dyes and vat dyes, wherein reduction is carried out in an aqueous alkaline medium using isomaltulose or an isomaltulose-containing mixture as reducing agent.

2. A process according to claim 1, characterised in that the reducing agent additionally contains trehalulose, isomaltose, saccharose, glucose, fructose or carbohydrate oligomers.

3. A process according to any one of the preceding claims,
characterised in that the reducing agent contains 10% to 90% by weight of trehalulose, 10% to 90% by weight of isomaltulose, 0% to 15% by weight of saccharose, 0% to 20% by weight of fructose, 0% to 20% by weight of glucose, 0% to 5% by weight of isomaltose and 0% to 5% by weight of carbohydrate oligomers (based on dry substance).

4. A process according to any one of the preceding claims,
characterised in that the reducing agent contains 42% by weight of trehalulose, 20% by weight of isomaltulose, 10% by weight of saccharose, 12% by weight of fructose, 10% by weight of glucose, 3% by weight of isomaltose and 3% by weight of oligomers (based on dry substance).

5. A process according to any one of claims 1 to 3, characterised in that the reducing agent contains 42% by weight of trehalulose, 20% by weight of isomaltulose, 17% by weight of fructose, 15% by weight of glucose, 3% by weight of isomaltose and 3% by weight of carbohydrate oligomers (based on dry substance).

6. A process according to any one of the preceding claims,
characterised in that the aqueous alkaline medium has a pH > 11.

7. A process according to any one of the preceding claims,
characterised in that reduction is carried out at at least 50°C, preferably 80°C to 100°C.

8. A process according to any one of the preceding claims,
characterised in that reduction takes place by ultrasonic action.

9. A process for dyeing or printing cellulose-containing textile materials using dyes from the group comprising sulphur dyes or vat dyes, wherein the initially water-insoluble dye is applied to the textile material, the dye is reduced by one of the processes according to any one of claims 1 to 8 and subsequently oxidised.

10. A process for dyeing or printing cellulose-containing textile materials using dyes from the group comprising sulphur dyes or vat dyes, wherein the initially water-insoluble dye is reduced according to any one of claims 1 to 8, then applied to the material and subsequently oxidised.

11. A process for dyeing or printing cellulose-containing textile materials using dyes from the group comprising sulphur dyes or vat dyes, wherein the initially water-insoluble dye is reduced according to any one of claims 1 to 8 and simultaneously applied to the material and subsequently oxidised.

12. A process according to any one of claims 9 to 11, characterised in that dyeing or printing takes place by ultrasonic action.
